# EUROPÄISCHE PATENTSCHRIFT

(11) **EP 2 034 269 B1**
(45) Veröffentlichungstag und Bekanntmachung des Hinweises auf die Patenterteilung: **19.07.2017**
(21) Anmeldenummer: 08008843.8
(22) Anmeldetag: 13.05.2008
(51) Int. Cl.: G01B 11/25

(54) **Verfahren und Vorrichtung zur dreidimensionalen Digitalisierung von Objekten**
Method and device for three-dimensional digitalising of objects
Procédé et dispositif destinés à la numérisation tridimensionnelle d'objets

(30) Priorität: 10.09.2007 DE 102007042963
(43) Veröffentlichungstag der Anmeldung: 11.03.2009
(73) Patentinhaber: Carl Zeiss Optotechnik GmbH, 83115 Neubeuern (DE)
(72) Erfinder: Daxauer, Herbert, 6344 Walchsee (DE); Mayer, Thomas, Dipl.-Ing., 93059 Kolbermoor (DE); Steinbichler, Marcus, Dr., 83115 Neubeuern (DE)
(74) Vertreter: Kirchner, Veit

(56) Entgegenhaltungen:
- EP-A- 1 724 549
- DE-A1- 19 502 459
- DE-A1- 19 626 889

## Beschreibung

Die Erfindung betrifft ein Verfahren und eine Vorrichtung zur dreidimensionalen Digitalisierung von Objekten, wobei mit einem Projektor ein Muster auf das Objekt projiziert wird, und das Muster mit einer oder mehreren Kameras erfaßt wird. Projektor und Kameras sind üblicherweise baulich in einen sogenannten 3D-Sensor integriert. Vorbekannt ist insbesondere die Digitalisierung mittels Weißlicht-Streifenprojektion. Bei diesem Verfahren projiziert der Projektor ein Streifenbild auf das zu digitalisierende Objekt. Das Streifenbild wird dann von der einen oder den mehreren Kameras erfaßt. Daraus können die lokalen Objektdaten ermittelt werden, d. h. die dreidimensionale Objektgeometrie im lokalen Koordinatensystem des 3D-Sensors. Für eine vollständige oder großflächige Digitalisierung eines Objekts muß der 3D-Sensor regelmäßig in verschiedene Aufnahmepositionen gebracht werden, und die lokalen Objektdaten an den einzelnen Aufnahmepositionen müssen in einem globalen Koordinatensystem zusammengeführt werden, insbesondere um die Meßergebnisse an den einzelnen Aufnahmepositionen zu einem Gesamtmeßergebnis für die gesamte gemessene Oberfläche zusammensetzen zu können. Dies erfordert eine genaue Erfassung der einzelnen Aufnahmepositionen in einem globalen Koordinatensystem.

Bei der Weißlicht-Streifenprojektion erfolgt die globale Erfassung der einzelnen Aufnahmepositionen üblicherweise mit photogrammetrischer Vermessung von Referenzmarken, die auf dem zu digitalisierenden Objekt angebracht bzw. aufgeklebt und separat mit einem Photogrammetriesystem ausgemessen werden. Die vor der Messung mit dem 3D-Sensor durchgeführte photogrammetrische Vermessung der Referenzmarken liefert einen Satz von Referenzpunkten, anhand dessen die lokalen Messungen des 3D-Sensors an den einzelnen Aufnahmepositionen in ein einheitliches, globales Koordinatensystem transformiert werden können.

Die photogrammetrische Vermessung der Referenzmarken liefert zwar eine hohe Genauigkeit, ist aber nachteilig wegen des Aufwands für das Präparieren des Objekts mit den Marken und des separaten Meßvorgangs. Alternativ werden auch projizierte Referenzmarken verwendet, die mit einem externen separaten Projektor auf das zu digitalisierende Objekt projiziert werden. Dies hat jedoch den Nachteil einer geringeren Genauigkeit gegenüber aufgeklebten Marken, da die Form der projizierten Marken von der Geometrie des Objekts beeinflußt wird.

Die DE 195 02 459 A1 beschreibt ein Verfahren zur dreidimensionalen optischen Vermessung der Oberfläche von Objekten, bei dem mit einem Projektor Lichtstrukturen auf das Objekt projiziert und mit einer Videokamera aufgenommen werden. Zur Kalibrierung der Kamera werden objektfeste homologe Marken auf die Objektoberfläche aufgebracht, mit deren Hilfe die Kalibrierung der Kamera durchgeführt wird.

Die DE 196 26 889 A1 beschreibt ein Verfahren und eine Vorrichtung zur Erfassung von Geometriedaten aus unterschiedlichen Beobachtungspositionen, wobei das zu untersuchende Objekt aus unterschiedlichen Beobachtungspositionen mit Hilfe eines optischen 3D-Sensors erfaßt wird. Zur Bestimmung der jeweiligen Lage des Sensors relativ zum Objekt werden Lichtmarken mit einem Texturprojektor auf das Objekt projiziert, so daß aus unterschiedlichen Beobachtungspositionen aufgenommene Objektdaten auf ein gemeinsames Koordinatensystem bezogen werden können.

Die europäische Patentanmeldung EP 1 724 549 A2 beschreibt ein Verfahren zum Bestimmen der 3D-Koordinaten der Oberfläche eines Objekts, wobei die 3D-Koordinaten der Objektoberfläche mit einem 3D-Meßsystem bestimmt werden. Dabei wird die Position des 3D-Meßgerätes mit einem Trackingsystem bestimmt.

Vor diesem Hintergrund ist es Aufgabe der vorliegenden Erfindung, ein verbessertes Verfahren und eine verbesserte Vorrichtung zur dreidimensionalen Digitalisierung von Objekten vorzuschlagen. Insbesondere sollen das erfindungsgemäße Verfahren und die erfindungsgemäße Vorrichtung eine vergleichsweise hohe Meßgenauigkeit bei vergleichsweise geringem Meßaufwand ermöglichen.

Erfindungsgemäß wird die Aufgabe durch ein Verfahren mit den Merkmalen des Patentanspruchs 1 gelöst. Bevorzugte Ausgestaltungen ergeben sich aus den abhängigen Ansprüchen. Bei dem erfindungsgemäßen Verfahren erfolgt die dreidimensionalen Digitalisierung der Objekte mit einem 3D-Sensor, der einen Projektor und eine oder mehrere Kameras umfaßt. Mit dem Projektor wird ein Muster auf das zu digitalisierende Objekt projiziert. Dieses Muster wird mit der einen oder den mehreren Kameras des 3D-Sensors erfaßt. Das erfindungsgemäße Verfahren zeichnet sich dadurch aus, daß der 3D-Sensor, vorzugsweise der Projektor des 3D-Sensors, mindestens drei Referenzmarken und/oder ein Referenzraster auf das zu digitalisierende Objekt projiziert. Diese Referenzmarken bzw. das Referenzraster werden mit zwei oder mehreren externen, kalibrierten digitalen Kameras erfaßt. Die externen, kalibrierten digitalen Kameras sind extern vom 3D-Sensor angeordnet, also insbesondere nicht in diesen integriert oder baulich fest mit diesem verbunden. Vielmehr ist die räumliche Lage der externen Kameras von der räumlichen Lage des 3D-Sensor unabhängig. Des weiteren sind die externen Kameras kalibriert, d. h. die innere und äußere Orientierung dieser Kameras ist bekannt. Bekannt sind demnach die räumliche Lage dieser Kameras im globalen Koordinatensystem (äußere Orientierung) sowie die Abbildungseigenschaften der Kameras (innere Orientierung). Dadurch kann mit den externen, kalibrierten digitalen Kameras die dreidimensionale Position der Referenzmarken bzw. des Referenzrasters im globalen Koordinatensystem bestimmt werden. Für die Transformation vom lokalen in das globale Koordinatensystem sind mindestens drei Referenzpunkte erforderlich, die in beiden Koordinatensystemen bekannt sind. Notwendig sind daher mindestens drei Referenzmarken, die mit den externen und den Kameras des Sensors vermessen werden. Alternativ kann auch ein Referenzraster verwendet werden, da ein solches mindestens drei Referenzpunkte liefert. Möglich sind auch Kombinationen aus ein oder zwei Referenzmarken mit einem Referenzraster oder jede andere Kombination aus Referenzmarke(n) und/oder Referenzraster(n), die mindestens drei Referenzpunkte liefert.

Das erfindungsgemäße Verfahren macht eine gesonderte Präparierung des zu digitalisierenden Objekts mit Photogrammetriemarken überflüssig. Vielmehr werden die Referenzmarken bzw. das Referenzraster von dem 3D-Sensor, vorzugsweise dem Projektor des 3D-Sensors, mit-projiziert. Die projizierten Referenzmarken bzw. das projizierte Referenzraster können von den externen Kameras in jeder Aufnahmeposition des 3D-Sensors in ihrer dreidimensionalen Position im globalen Koordinatensystem gemessen werden und zur Transformation der lokalen Objektdaten aus den Einzelmessungen des 3D-Sensors in ein globales Koordinatensystem verwendet werden. Das erfindungsgemäße Verfahren bietet also den entscheidenden Vorteil, daß auf ein gesondertes Anbringen von Referenzmarken oder auf eine separate Projektion von Referenzmarken mit einem externen Projektor verzichtet werden kann.

In einer bevorzugten Ausgestaltung des erfindungsgemäßen Verfahrens erfolgt die Erfassung der Referenzmarken bzw. des Referenzrasters mit den externen Kameras simultan. Dadurch kann die Meßgenauigkeit erhöht werden, insbesondere wenn sich das zu digitalisierende Objekt bewegt, beispielsweise im Fall von Vibrationen.

In einer anderen bevorzugten Ausgestaltung erfolgt die Projektion der Referenzmarken oder des Referenzrasters mit einem bildgebenden Element im Projektor des 3D-Sensors. Vorteilhafterweise wird als bildgebendes Element ein Dia, ein digitales Projektionselement, ein transmittives LCD-Display, ein Spiegelarray und/oder ein LCOS-Display verwendet.

Nach einer anderen bevorzugten Ausgestaltung ist es vorgesehen, die Projektion der Referenzmarken bzw. des Referenzraster in Helligkeit und/oder Form zu variieren. Vorteilhafterweise wird diese Variation derart vorgenommen, daß die Meßgenauigkeit erhöht und/oder optimiert wird. Dabei wird die Erhöhung der Meßgenauigkeit insbesondere dadurch erreicht, daß eine genauere Detektion der Position der Referenzmarken bzw. des Referenzrasters durch die externen Kamera's und die Kamera(s) im 3D-Sensor ermöglicht wird. Die Variation der Referenzmarken bzw. des Referenzrasters in der Form kann beispielsweise kreisrunde Marken, kreuzförmige Marken oder unterschiedlich verlaufende Rasterlinien vorsehen.

In einer anderen bevorzugten Ausgestaltung werden die Referenzmarken bzw. das Referenzraster in möglichst ebene Bereiche des zu digitalisierenden Objekts projiziert. Dadurch werden Verzerrungen der projizierten Referenzmarken bzw. des projizierten Referenzrasters vermindert bzw. vermieden, so daß die Genauigkeit von deren Erfassung erhöht werden kann. Vorteilhafterweise wird dabei derart vorgegangen, daß in einer Aufnahmeposition des 3D-Sensors zunächst die lokalen Objektdaten, d. h. die Objektgeometrie im lokalen Koordinatensystem des 3D-Sensors ermittelt werden. Anhand dieser lokalen Objektdaten werden dann möglichst ebene und senkrecht zur optischen Achse des Projektors stehende Bereiche des zu digitalisierenden Objekts selektiert. Dann werden die Referenzmarken oder das Referenzraster in die selektierten Objektbereiche projiziert. Realisiert werden können derart bevorzugte Verfahren insbesondere mit einem digitalen Projektor im 3D-Sensor, der sowohl Muster als auch Referenzmarken bzw. Referenzraster projiziert.

In einer anderen bevorzugten Ausgestaltung wird die Form der Referenzmarken bzw. des Referenzrasters nach der Messung der lokalen Objektdaten derart korrigiert, daß ihre Form auf dem Objekt möglichst weitgehend einer Sollform entspricht. Auch diese Ausgestaltung erlaubt eine höhere Meßgenauigkeit.

In einer anderen bevorzugten Ausgestaltung wird die Größe der projizierten Referenzmarken bzw. des Referenzrasters an die Auflösung der externen Kameras und/oder der einen oder der mehreren Kameras des 3D-Sensors angepaßt.

In einer anderen bevorzugten Ausgestaltung werden die Referenzmarken bzw. das Referenzraster im Zeitbereich in ihrer Helligkeit moduliert, und die Referenzmarken bzw. das Referenzraster werden anhand einer Bildfolge der externen Kameras erfaßt. Dadurch kann die Genauigkeit der Erfassung durch die externen Kameras erhöht werden.

In einer anderen bevorzugten Ausgestaltung werden die Referenzmarken bzw. das Referenzraster mit einem Identitätscode versehen. Vorzugsweise kann der Identitätscode durch räumliche und/oder zeitliche Modulation der Helligkeit der Referenzmarken bzw. des Referenzraster aufmoduliert werden. Eine andere Möglichkeit ist die zeitliche Modulation der Form der Referenzmarken bzw. des Referenzrasters.

Erfindungsgemäß wird die Aufgabe weiter gelöst durch eine Vorrichtung mit den Merkmalen des Anspruchs 11. Bevorzugte Ausgestaltungen der Vorrichtung ergeben sich aus den zugehörigen abhängigen Anspruchen. Ein Ausführungsbeispiel der Erfindung wird anhand der nachstehenden Figuren näher erläutert. Dabei zeigen:
- Fig. 1:: Eine erfindungsgemäße Vorrichtung (1) mit einem 3D-Sensor (10) und externen Kameras (2), und
- Fig. 2:: Den schematischen Ablauf eines Ausführungsbeispiels des erfindungsgemäßen Verfahren.

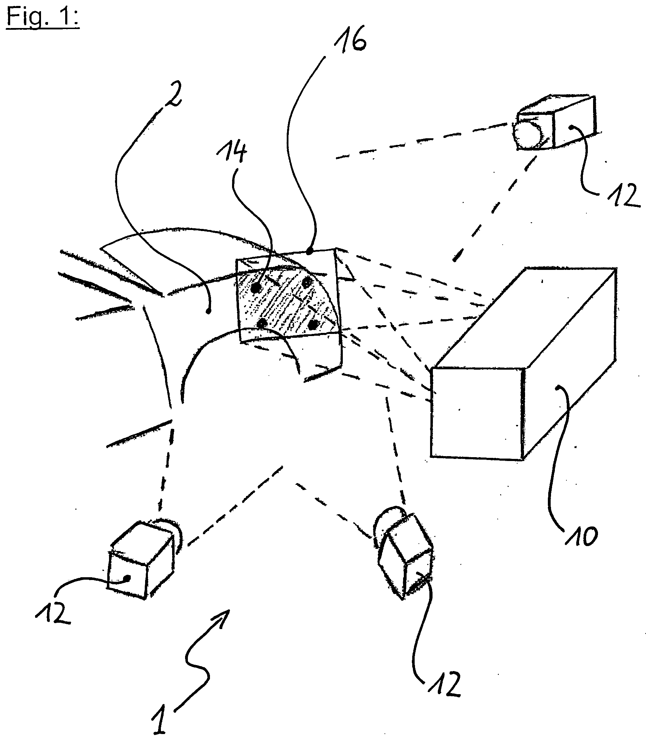

Fig. 1 zeigt eine erfindungsgemäße Vorrichtung 1 bei der dreidimensionalen Digitalisierung bzw. Vermessung eines Objektes, nämlich eines Autokotflügels 2. Die erfindungsgemäße Vorrichtung umfaßt einen 3D-Sensor 10, in den ein Musterprojektor und zwei Kameras integriert sind. Der Musterprojektor projiziert zum einen ein Weißlicht-Streifenmuster und zum anderen vier Referenzmarken 14 in den Meßbereich 16. Mit seinen beiden Kameras erfaßt der 3D-Sensor 10 zum einen die dreidimensionalen lokalen Objektdaten im Meßbereich 16, d. h. die dreidimensionale Geometrie des Kotflügelausschnitts 16 im lokalen Koordinatensystem des 3D-Sensors. Des weiteren erfaßt der 3D-Sensor die dreidimensionale Position der Referenzmarken 14 im lokalen Koordinatensystem des 3D-Sensors. Des weiteren umfaßt die in Fig. 1 gezeigte erfindungsgemäße Vorrichtung 1 drei externe Kameras 12. Die externen Kameras 12 sind in ihrer räumlichen Lage unabhängig von der räumlichen Lage des 3D-Sensors 10. Insbesondere kann bei Verschiebung des 3D-Sensors 10 in eine neue Aufnahmeposition die räumliche Lage der externen Kameras 12 beibehalten werden. Die externen Kameras sind kalibriert, d. h. ihre innere und äußere Orientierung ist bekannt. Bekannt ist insbesondere die räumliche Lage der drei externen Kameras im globalen Koordinatensystem sowie deren Abbildungseigenschaften. Die drei externen Kameras erfassen die dreidimensionalen Position der Referenzmarken im globalen Koordinatensystem. Damit ist die Ermittlung der dreidimensionalen Koordinaten der Referenzmarken sowohl im globalen als auch im lokalen Koordinatensystem des 3D-Sensors möglich. Dies ermöglicht die Transformation der in verschiedenen Aufnahmepositionen gemessenen lokalen Objektdaten in ein globales Koordinatensystem und somit die Zusammenführung der in verschiedenen Aufnahmepositionen durchgeführten Einzelmessungen zu einem Gesamtmeßergebnis.

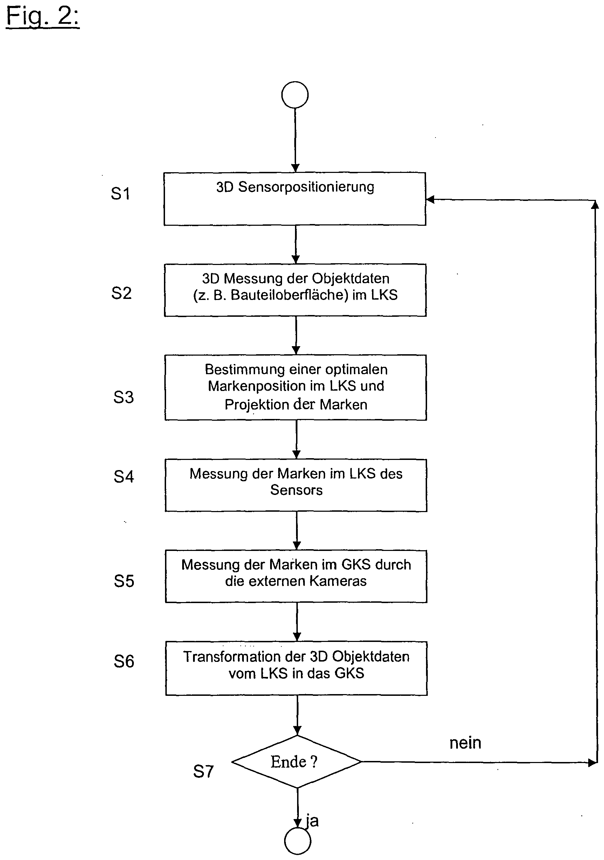

Fig. 2 zeigt den schematischen Ablauf eines Ausführungsbeispiels des erfindungsgemäßen Verfahrens. Im Schritt S1 wird der 3D-Sensor in einer bestimmten Aufnahmeposition positioniert. Im Schritte S2 werden in dem vom 3D-Sensor abgedeckten Meßbereich 16 die dreidimensionalen Objektdaten im lokalen Koordinatensystem (LKS) gemessen. Beispielsweise wird eine im Meßbereich befindliche Bauteiloberfläche im lokalen Koordinatensystem dreidimensional vermessen. Im Schritt S3 werden anhand der im Schritt S2 ermittelten lokalen Objektdaten optimale Positionen für die drei Referenzmarken im lokalen Koordinatensystem ermittelt. Des weiteren werden die Referenzmarken an diese optimalen Positionen projiziert. Im Schritt S4 wird die dreidimensionale Position der Referenzmarken im lokalen Koordinatensystem des 3D-Sensors gemessen. Im Schritt S5 wird die dreidimensionale Position der Referenzmarken im globalen Koordinatensystem (GKS) durch die externen Kameras gemessen. Im Schritt S6 werden die lokalen dreidimensionalen Objektdaten aus der Messung im Schritt S2 vom lokalen Koordinatensystem in das globale Koordinatensystem transformiert. Im Schritt S7 wird abgefragt, ob der Gesamtmeßvorgang beendet ist, oder ob in einer anderen Aufnahmeposition eine weitere Messung durchgeführt werden soll. Lautet die Antwort im Schritt S7 nein, wird der 3D-Sensor neu positioniert und die Schritte S1 bis S7 werden erneut durchgeführt. Lautet die Antwort im Schritt S7 ja, ist der Gesamtmeßvorgang beendet.

Mit der Erfindung werden eine Vielzahl von Vorteilen erreicht. Insbesondere kann mit vergleichsweise geringem Aufwand eine vergleichsweise hohe Meßgenauigkeit erreicht werden.

## Patentansprüche

1. Verfahren zur dreidimensionalen Digitalisierung von Objekten (2) mit einem 3D-Sensor (10), welcher einen Projektor und eine oder mehrere Kameras umfasst, wobei in dem Verfahren:
mit dem Projektor ein Muster auf das Objekt (2) projiziert wird,
das Muster mit der einen oder den mehreren Kameras erfasst wird, und
mit dem 3D-Sensor (10) mindestens drei Referenzmarken (14) und/oder ein Referenzraster auf das Objekt (2) projiziert werden und die Position der drei Referenzmarken (14) und/oder des Referenzrasters gemessen wird, **dadurch gekennzeichnet, dass**
der Projektor und die eine oder die mehreren Kameras in dem 3D-Sensor (10) integriert sind, und
die Referenzmarken (14) bzw. das Referenzraster mit zwei oder mehreren externen, kalibrierten digitalen Kameras (12) erfasst werden, wobei
die räumliche Lage der externen, kalibrierten digitalen Kameras (12) in einem globalen Koordinatensystem sowie deren Abbildungseigenschaften bekannt sind.

2. Verfahren nach Anspruch 1, **dadurch gekennzeichnet, dass** die externen, kalibrierten digitalen Kameras (12) die Referenzmarken (14) bzw. das Referenzraster simultan erfassen.

3. Verfahren nach Anspruch 1 oder 2, **dadurch gekennzeichnet, dass** die Projektion der Referenzmarken (14) oder des Referenzrasters mit einem bildgebenden Element im Projektor des 3D-Sensors (10) erfolgt.

4. Verfahren nach einem der vorhergehenden Ansprüche, **dadurch gekennzeichnet, dass** die Messgenauigkeit durch Variation der Projektion der Referenzmarken (14) bzw. des Referenzrasters in Helligkeit und/oder Form optimiert wird.

5. Verfahren nach einem der vorhergehenden Ansprüche, **dadurch gekennzeichnet, dass** die Projektion der Referenzmarken (14) bzw. des Referenzrasters in möglichst ebenen Bereichen des zu digitalisierenden Objekts erfolgt.

6. Verfahren nach dem vorhergehenden Anspruch, **dadurch gekennzeichnet, dass** das Verfahren folgende Schritte umfasst:
- Messung von lokalen Objektdaten mit dem 3D-Sensor (10),
- Selektierung von möglichst ebenen und senkrecht zur optischen Achse des Projektors stehenden Objektbereichen aus den lokalen Objektdaten, und
- Projektion der Referenzmarken (14) oder des Referenzrasters an den selektierten Objektbereichen.

7. Verfahren nach einen der vorhergehenden Ansprüche, **dadurch gekennzeichnet, dass** die Form der Referenzmarken (14) bzw. des Referenzrasters nach der Messung der lokalen Objektdaten derart korrigiert wird, dass die projizierten Referenzmarken (14) bzw. das projizierte Referenzraster auf dem Objekt möglichst weitgehend einer Sollform entsprechen.

8. Verfahren nach einem der vorhergehenden Ansprüche, **dadurch gekennzeichnet, dass** die Größe der projizierten Referenzmarken (14) bzw. des Referenzrasters an die Auflösung der externen Kameras (12) und/oder der einen oder mehreren Kameras des 3D-Sensors (10) angepasst wird.

9. Verfahren nach einem der vorhergehenden Ansprüche, **dadurch gekennzeichnet, dass** die Referenzmarken (14) bzw. das Referenzraster in ihrer Helligkeit moduliert werden, und dass die Erfassung der Referenzmarken (14) bzw. des Referenzrasters anhand einer Bildfolge der externen Kameras (12) erfolgt.

10. Verfahren nach einem der vorhergehenden Ansprüche, **dadurch gekennzeichnet, dass** die Referenzmarken (14) bzw. das Referenzraster mit einem Identitätscode projiziert werden, der vorzugsweise durch räumliche und/oder zeitliche Modulation der Helligkeit und/oder zeitliche Modulation der Form der Referenzmarken (14) bzw. des Referenzrasters aufmoduliert wird.

11. Vorrichtung (1) zur dreidimensionalen Digitalisierung von Objekten (2) mit
einem 3D-Sensor (10), welcher einen Projektor und eine oder mehrere Kameras umfasst, wobei
mit dem Projektor ein Muster auf das Objekt (2) projizierbar ist, und das Muster mit der einen oder den mehreren Kameras erfassbar ist, und
mit dem 3D-Sensor (10) mindestens drei Referenzmarken (14) und/oder ein Referenzraster auf das Objekt (2) projizierbar sind und die Position der drei Referenzmarken (14) und/oder des Referenzrasters messbar ist, **dadurch gekennzeichnet, dass**
der Projektor und die eine oder die mehreren Kameras in dem 3D-Sensor (10) integriert sind, und
zwei oder mehrere externe, kalibrierte digitale Kameras (12) vorhanden sind, mit denen die Referenzmarken (14) bzw. das Referenzraster erfassbar sind, wobei
die räumliche Lage der externen, kalibrierten digitalen Kameras (12) in einem globalen Koordinatensystem sowie deren Abbildungseigenschaften bekannt sind.

12. Vorrichtung nach dem vorhergehenden Anspruch, **dadurch gekennzeichnet, dass** der Projektor des 3D-Sensors (10) ein bildgebendes Element zur Projektion der Referenzmarken (14) bzw. des Referenzrasters umfasst.

13. Vorrichtung nach einem der beiden vorhergehenden Ansprüche, **dadurch gekennzeichnet, dass** der 3D-Sensor (10) derart ausgestaltet ist, dass die Helligkeit und/oder Farbe und/oder Form der projizierten Referenzmarken (14) bzw. des projizierten Referenzrasters variierbar ist.

14. Vorrichtung nach einem der drei vorhergehenden Ansprüche, **dadurch gekennzeichnet, dass** der 3D-Sensor (10) derart ausgestaltet ist, dass die Referenzmarken (14) und/oder das Referenzraster mit einem Identitätscode projizierbar sind.

## Claims

1. A method for the three-dimensional digitizing of objects (2) using a 3D sensor (10) that comprises a projector and one or more cameras, wherein in the method:
a pattern is projected onto the object (2) by the projector;
the pattern is detected by the one or more cameras; and
at least three reference marks (4) and/or one reference pattern are/is projected onto the object (2) using the 3D sensor and the position of the three reference marks (14) and/or of the reference pattern are/is measured,
**characterized in that**
the projector and the one or more cameras are integrated in the 3D sensor (10); and
**in that** the reference marks (14) or the reference pattern are/is detected by two or more external calibrated digital cameras (12), with
the spatial position of the external calibrated digital cameras (12) in a global coordinate system and their imaging properties being known.

2. A method in accordance with claim 1, **characterized in that** the external calibrated digital cameras (12) detect the reference marks (14) or the reference pattern simultaneously.

3. A method in accordance with claim 1 or claim 2, **characterized in that** the projection of the reference marks (14) or of the reference pattern takes place using an imaging element in the projector of the 3D sensor (10).

4. A method in accordance with one of the preceding claims, **characterized in that** the measurement accuracy is optimized by varying the brightness and/or shape of the projection of the reference marks (14) or of the reference pattern.

5. A method in accordance with one of the preceding claims, **characterized in that** the projection of the reference marks (14) or of the reference pattern takes place in regions of the object to be digitized that are as planar as possible.

6. A method in accordance with the preceding claim, **characterized in that** the method comprises the following steps:
- measuring local object data using the 3D sensor (10);
- selecting object regions from the local object data that are as planar as possible and perpendicular to the optical axis of the projector; and
- projecting the reference marks (14) or the reference pattern at the selected object regions.

7. A method in accordance with one of the preceding claims, **characterized in that** the shape of the reference marks (14) or of the reference pattern is corrected after the measurement of the local object data such that the projected reference marks (14) or the projected reference pattern on the object correspond to the largest extent possible to a desired shape.

8. A method in accordance with one of the preceding claims, **characterized in that** the size of the projected reference marks (14) or of the reference pattern is adapted to the resolution of the external camera (12) and/or to one or more cameras of the 3D sensor (10).

9. A method in accordance with one of the preceding claims, **characterized in that** the brightness of the reference marks (14) or of the reference pattern is modulated; and **in that** the detection of the reference marks (14) or of the reference pattern takes place with reference to an image sequence of the external camera (12).

10. A method in accordance with one of the preceding claims, **characterized in that** the reference marks (14) or the reference pattern are/is projected with an identity code that is preferably modulated by spatial and/or temporal modulation of the brightness and/or temporal modulation of the shape of the reference marks (14) or of the reference pattern.

11. An apparatus (1) for the three-dimensional digitizing of objects (2) using a 3D sensor (10) that comprises a projector and one or more cameras, wherein
a pattern can be projected onto the object (2) by the projector and the pattern can be detected by the one or more cameras; and
at least three reference marks (14) and/or one reference pattern are/is projectable onto the object (2) using the 3D sensor (10) and the position of the three reference marks (14) and/or of the reference pattern are/is measurable,
**characterized in that**
the projector and the one or more cameras are integrated in the 3D sensor (10); and
two or more external calibrated digital cameras (12) are present by which the reference marks (14) or the reference pattern can be detected, with the spatial position of the external calibrated digital camera (12) in a global coordinate system and its imaging properties being known.

12. An apparatus in accordance with the preceding claim, **characterized in that** the projector of the 3D sensor (10) comprises an imaging element for projecting the reference marks (14) or the reference pattern.

13. An apparatus in accordance with one of the two preceding claims, **characterized in that** the 3D sensor (10) is configured such that the brightness and/or color and/or shape of the projected reference marks (14) or of the projected reference pattern is/are variable.

14. An apparatus in accordance with one of the three preceding claims, **characterized in that** the 3D sensor (10) is configured such that the reference marks (14) and/or the reference pattern can be projected with an identity code.

## Revendications

1. Procédé destiné à la numérisation tridimensionnelle d'objets (2) au moyen d'un capteur 3D (10), qui comprend un projecteur et une ou plusieurs caméras, dans lequel
dans le procédé :
un motif est projeté sur l'objet (2) au moyen du projecteur,
le motif est capturé au moyen de la ou des plusieurs caméras, et
au moins trois repères de référence (14) et/ou une grille de référence sont projetés sur l'objet (2) au moyen du capteur 3D (10) et la position des trois repères de référence (14) et/ou de la grille de référence est mesurée,
**caractérisé en ce que**
le projecteur et la ou les plusieurs caméras sont intégrés dans le capteur 3D (10), et
les repères de référence (14) ou la grille de référence sont capturés au moyen de deux ou plus de deux caméras (12) numériques extérieures étalonnées,
la position dans l'espace des caméras (12) numériques extérieures étalonnées dans un système de coordonnées global ainsi que leurs propriétés d'image étant connues.

2. Procédé selon la revendication 1, **caractérisé en ce que**
les caméras (12) numériques extérieures étalonnées capturent simultanément les repères de référence (14) ou la grille de référence.

3. Procédé selon la revendication 1 ou 2, **caractérisé en ce que**
la projection des repères de référence (14) ou de la grille de référence est effectuée au moyen d'un élément d'imagerie dans le projecteur du capteur 3D (10).

4. Procédé selon l'une des revendications précédentes, **caractérisé en ce que** la précision de mesure est optimisée par la variation de la luminosité et/ou de la forme de la projection des repères de référence (14) ou de la grille de référence.

5. Procédé selon l'une des revendications précédentes, **caractérisé en ce que** la projection des repères de référence (14) ou de la grille de référence est effectuée dans des zones les plus planes possible de l'objet à numériser.

6. Procédé selon la revendication précédente, **caractérisé en ce que**
le procédé comporte les étapes suivantes :
- la mesure de données d'objet locales au moyen du capteur 3D (10),
- la sélection de zones d'objet les plus planes possible et perpendiculaires à l'axe optique du projecteur à partir des données d'objet locales, et
- la projection des repères de référence (14) ou de la grille de référence sur les zones d'objet sélectionnées.

7. Procédé selon l'une des revendications précédentes, **caractérisé en ce que** la forme des repères de référence (14) ou de la grille de référence est corrigée après la mesure des données d'objet locales de telle manière que les repères de référence (14) projetés ou la grille de référence projetée sur l'objet correspondent le mieux possible à une forme théorique.

8. Procédé selon l'une des revendications précédentes, **caractérisé en ce que** la taille des repères de référence (14) projetés ou de la grille de référence est adaptée à la résolution des caméras (12) extérieures et/ou à la ou aux plusieurs caméras du capteur 3D (10).

9. Procédé selon l'une des revendications précédentes, **caractérisé en ce que** la luminosité des repères de référence (14) ou de la grille de référence est modulée, et **en ce que** la capture des repères de référence (14) ou de la grille de référence est effectuée à l'aide d'une séquence d'images des caméras (12) extérieures.

10. Procédé selon l'une des revendications précédentes, **caractérisé en ce que** les repères de référence (14) ou la grille de référence sont projetés avec un code d'identité, qui est modulé de préférence par une modulation dans l'espace et/ou dans le temps de la luminosité et/ou une modulation dans le temps de la forme des repères de référence (14) ou de la grille de référence.

11. Dispositif (1) destiné à la numérisation tridimensionnelle d'objets (2) au moyen d'un capteur 3D (10), qui comprend un projecteur et une ou plusieurs caméras, dans lequel
un motif peut être projeté sur l'objet (2) au moyen du projecteur, et le motif peut être capturé avec la ou les plusieurs caméras, et
au moins trois repères de référence (14) et/ou une grille de référence peuvent être projetés sur l'objet (2) au moyen du capteur 3D (10) et la position des trois repères de référence (14) et/ou de la grille de référence peut être mesurée,
**caractérisé en ce que**
le projecteur et la ou les plusieurs caméras sont intégrés dans le capteur 3D (10), et
deux ou plus de deux caméras (12) numériques extérieures étalonnées sont présentes, au moyen desquelles les repères de référence (14) ou la grille de référence peuvent être capturés, la position dans l'espace des caméras (12) numériques extérieures étalonnées dans un système de coordonnées global ainsi que leurs propriétés d'image étant connues.

12. Dispositif selon la revendication précédente, **caractérisé en ce que** le projecteur du capteur 3D (10) comprend un élément d'imagerie pour la projection des repères de référence (14) ou de la grille de référence.

13. Dispositif selon l'une des deux revendications précédentes, **caractérisé en ce que**
le capteur 3D (10) est conçu de telle manière que la luminosité et/ou la couleur et/ou la forme des repères de référence (14) projetés ou de la grille de référence projetée peuvent être variées.

14. Dispositif selon l'une des trois revendications précédentes, **caractérisé en ce que**
le capteur 3D (10) est conçu de telle manière que les repères de référence (14) et/ou la grille de référence peuvent être projetés avec un code d'identité.
